# EUROPÄISCHE PATENTSCHRIFT

(11) **EP 2 807 056 B1**
(45) Veröffentlichungstag und Bekanntmachung des Hinweises auf die Patenterteilung: **09.12.2015**
(21) Anmeldenummer: 13700682.1
(22) Anmeldetag: 14.01.2013
(51) Int. Cl.: B60R 21/017

(54) **VERFAHREN UND ANORDNUNG ZUR ANSTEUERUNG VON MINDESTENS EINEM AUSLÖSEELEMENT FÜR PERSONENSCHUTZMITTEL**
METHOD AND ARRANGEMENT FOR ACTUATING AT LEAST ONE TRIGGERING ELEMENT FOR A PERSONAL PROTECTION MEANS
PROCÉDÉ ET SYSTÈME DE COMMANDE D'AU MOINS UN ÉLÉMENT DE DÉCLENCHEMENT D'UN MOYEN DE PROTECTION DES PERSONNES

(30) Priorität: 24.01.2012 DE 102012200955
(43) Veröffentlichungstag der Anmeldung: 03.12.2014
(73) Patentinhaber: Robert Bosch GmbH, 70442 Stuttgart (DE)
(72) Erfinder: WALKER, Steffen, 72770 Reutlingen (DE); SCHMAUDER, Wolfgang, 72829 Engstingen (DE)
(86) Internationale Anmeldenummer: PCT/EP2013/050554
(87) Internationale Veröffentlichungsnummer: WO 2013/110519

(56) Entgegenhaltungen:
- DE-A1-102009 027 918
- DE-C1- 19 826 704

## Beschreibung

### Stand der Technik

Die Erfindung geht aus von einem Verfahren zur Ansteuerung von mindestens einem Auslöseelement für Personenschutzmittel nach der Gattung des unabhängigen Patentanspruchs 1 und einer Anordnung zur Ansteuerung von mindestens einem Auslöseelement für Personenschutzmittel nach der Gattung des unabhängigen Patentanspruchs 6.

Bei der Zündung von Zündpillen für Personenschutzmittel, wie beispielsweise Airbags, bilden diese bei der Explosion häufig Lichtbögen und somit Kurzschlüsse zu Leitungen oder Karosserieteilen aus. Dies äußert sich in einer Änderung des Widerstandswerts der Zündpille während der Zündung. Eine Endstufe einer solchen Zündanordnung liefert aufgrund dieser Laständerung sehr hohe Zündströme, welche zum Teil einen bis zu zehnfachen Wert des typischen Zündstroms aufweisen.

Dokument DE 198 26 704 C1 offenbart ein Verfahren und eine Anordnung gemäß Oberbegriff des Ansprüche 1 und 6.

In der Offenlegungsschrift DE 10 2009 027 918 A1 werden beispielsweise eine Anordnung und ein Verfahren zur Ansteuerung von wenigstens einem Auslöseelement für Personenschutzmittel beschrieben. Die beschriebene Anordnung umfasst eine High-Side-Schaltung, welche eine erste Verbindung von einer Energiequelle zu dem wenigstens einen Auslöseelement herstellt, und eine Low-Side-Schaltung, welche eine zweite Verbindung von dem wenigstens einen Auslöseelement zur Masse herstellt. Des Weiteren ist eine Regelung vorgesehen, welche einen Auslösestrom für das wenigstens eine Auslöseelement regelt, wobei die Regelung der High-Side-Schaltung und/oder der Low-Side-Schaltung zugeordnet ist. Zudem weisen die High-Side-Schaltung und die Low-Side-Schaltung jeweils zwei parallel geschaltete Endstufen für die Regelung des Auslösestroms pro Auslöseelement auf, wobei zumindest eine der wenigstens zwei Endstufen eine Stromregelung und einen oder mehrere parallel geschaltete Transistoren aufweisen. Durch die Parallelisierung der Endstufen ist eine Skalierung darstellbar, d.h. höhere bzw. längere Auslösestromimpulse werden mit zwei oder mehr parallel geschalteten Endstufen realisiert. Die Auslösestromimpulse führen zur Zündung eines Sprengsatzes bzw. zur magnetischen Betätigung eines Personenschutzmittels.

In der Offenlegungsschrift DE 10 2005 055 068 A1 wird beispielsweise eine Vorrichtung zur Ansteuerung eines Zündelements beschrieben. Die beschriebene Vorrichtung umfasst zwei Zündstrommesseinrichtungen, welche jeweils einen Zündstrom messen und mit jeweiligen Schwellen vergleichen. Zudem bestimmen die Zündstrommesseinrichtungen die jeweiligen Zeiten, für welche der Zündstrom über der jeweiligen Schwelle liegt. Des Weiteren umfasst die beschriebene Vorrichtung eine Zündstrombegrenzung, welche wenigstens einem Zündschalter zugeordnet und auf wenigstens zwei unterschiedliche Stromniveaus einstellbar ist. Zudem umfasst die beschriebene Vorrichtung wenigstens zwei Zündzeitmesseinrichtungen, welche den jeweiligen Zündschalter für eine jeweilige Zündzeitspanne freigeben, wobei eine der wenigstens zwei Zündzeitmesseinrichtungen die Strombegrenzung einstellt.

### Offenbarung der Erfindung

Das erfindungsgemäße Verfahren zur Ansteuerung von mindestens einem Auslöseelement für Personenschutzmittel mit den Merkmalen des unabhängigen Patentanspruchs 1 sowie die erfindungsgemäße Anordnung zur Ansteuerung von mindestens einem Auslöseelement für Personenschutzmittel mit den Merkmalen des unabhängigen Patentanspruchs 6 haben demgegenüber den Vorteil, dass durch kleinere Zündendstufen eine Kostenersparnis erzielt werden kann. Zudem erhöhen Ausführungsformen der vorliegenden Erfindung die Robustheit der Zündanordnung im Crashfall, ermöglichen eine geringe Stromentnahme aus der Energiereserve im zugehörigen Steuergerät und reduzieren bzw. vermeiden hohe Strompeaks.

Der Kern der vorliegenden Erfindung liegt in der Nutzung einer Zündstromdetektion, um Aussetzer im Zündstrom während eines Zündvorgangs zu erkennen. In Abhängigkeit von erkannten Zündstromaussetzern werden die Eigenschaften des Zündstromregelvorgangs so verändert, dass nur noch geringfügige Zündstromüberhöhungen auftreten können. Dies lässt eine Dimensionierung der Endstufenfläche auf die typischen Zündströme zu, es muss keine zusätzliche Fläche für intermittierende hohe Kurzschlussströme vorgehalten werden.

Ausführungsformen der vorliegenden Erfindung kontrollieren in vorteilhafter Weise die Eigenschaften der unterschiedlichen Zündkreislasten, so dass eine weitgehend flächenneutrale Integration der High-Side-Endstufe möglich wird. Die flächenmäßige Auslegung einer integrierten High-Side-Endstufe richtet sich vor allem nach der Verlustleistung und Verlustenergie, welche die Endstufe im Falle eines Kurzschlusses während eines Zündvorganges erfährt. Die umgesetzte Energie wird in die Wärmekapazität der Endstufe, welche durch die erforderliche Siliziumfläche gegeben ist, eingebracht und über den Effekt der Wärmeableitung über die Zeit abtransportiert. Daher kann durch Ausführungsformen der vorliegenden Erfindung die Endstufenfläche reduziert werden.

Ausführungsformen der vorliegenden Erfindung stellen ein Verfahren zur Ansteuerung von mindestens einem Auslöseelement für Personenschutzmittel zur Verfügung. Hierbei wird über eine High-Side-Steuerschaltung eine erste Verbindung von einer Energiequelle zu dem mindestens einen Auslöseelement hergestellt und über eine Low-Side-Steuerschaltung wird eine zweite Verbindung von dem mindestens einen Auslöseelement zur Masse hergestellt. Des Weiteren wird nach Aktivierung eines Zündvorgangs ein Zündstrom für das mindestens eine Auslöseelement auf einen vorgegebenen Nominalwert geregelt. Erfindungsgemäß wird der Zündstrom fortlaufend detektiert und mit einem vorgegebenen ersten Schwellwert verglichen, wobei erste Phasen, in welchen der Zündstrom nach Erreichen des Nominalwerts den ersten Schwellwert unterschreitet, und zweite Phasen in welchen der Zündstrom nach Unterschreiten des ersten Schwellwerts den Nominalwert wieder erreicht oder überschreitet, bestimmt werden. Zudem werden die Wechsel zwischen den Zündstromphasen gezählt, und eine Regelgeschwindigkeit wird erhöht, wenn die Anzahl der Wechsel zwischen den Zündstromphasen einen vorgegebenen zweiten Schwellwert erreicht oder überschreitet.

Zudem wird eine Anordnung zur Ansteuerung von mindestens einem Auslöseelement für ein Personenschutzmittel vorgeschlagen, welche eine High-Side-Steuerschaltung, welche eine erste Verbindung von einer Energiequelle zu dem mindestens einen Auslöseelement herstellt, eine Low-Side-Steuerschaltung, welche eine zweite Verbindung von dem mindestens einen Auslöseelement zur Masse herstellt, und eine Regelanordnung umfasst, welche einen Zündstrom für das mindestens eine Auslöseelement nach Aktivierung eines Zündvorgangs auf einen vorgegebenen Nominalwert regelt. Erfindungsgemäß vergleicht eine Auswerte- und Steuereinheit den fortlaufend detektierten Zündstrom mit einem vorgegebenen ersten Schwellwert, und bestimmt erste Phasen, in welchen der Zündstrom nach Erreichen des Nominalwerts den ersten Schwellwert unterschreitet, und zweite Phasen, in welchen der Zündstrom nach Unterschreiten des ersten Schwellwerts den Nominalwert wieder erreicht oder überschreitet. Des Weiteren zählt die Auswerte- und Steuereinheit die Wechsel zwischen den Zündstromphasen und erhöht eine Regelgeschwindigkeit der Regelanordnung, wenn die Anzahl der Wechsel zwischen den Zündstromphasen einen vorgegebenen zweiten Schwellwert erreicht oder überschreitet.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Ansteuerung von mindestens einem Auslöseelement für Personenschutzmittel und der im unabhängigen Patentanspruch 6 angegebenen Anordnung zur Ansteuerung von mindestens einem Auslöseelement für Personenschutzmittel möglich.

Besonders vorteilhaft ist, dass der zweite Schwellwert als Anzahl der Wechsel im Bereich von 2 bis 4 vorgegeben werden kann. Dadurch kann in vorteilhafter Weise ein Zündelement mit einem intermittierenden Zündstromverhalten sicher erkannt und die Regelgeschwindigkeit entsprechend erhöht werden.

In vorteilhafter Ausgestaltung des erfindungsgemäßen Verfahrens kann durch Auswerten des Zündstromverlaufs ein angeschlossener Zündkreis erkannt werden. Bei intermittierenden Stromwerten kann beispielsweise eine Zündpille mit intermittierenden Widerstandswerten erkannt werden. Bei im Wesentlichen gleichbleibenden Stromwerten kann beispielsweise ein LEA-Zündkreis erkannt werden. In vorteilhafter Ausgestaltung der erfindungsgemäßen Anordnung kann die Auswerte- und Steuereinheit den Zündstrom über die Regelanordnung und mindestens eine Endstufe einstellen, wobei die mindestens eine Endstufe einen Leistungstransistor zum Einstellen des Zündstroms und einen Sense-Transistor zum Einstellen eines Sense-Stroms aufweist, welcher den Zündstrom repräsentiert. Des Weiteren erfasst ein Stromdetektor fortlaufend den Sense-Strom.

In vorteilhafter Ausgestaltung der erfindungsgemäßen Anordnung kann die Regelanordnung eine Stromquelle, welche einen Referenzstrom erzeugt, und einen Regler aufweisen. Die Auswerte- und Steuereinheit kann die Stromquelle und den Regler aktivieren, welcher den Referenzstrom mit dem Sense-Strom vergleicht, welcher den erfassten Zündstrom repräsentiert, wobei der Regler in Abhängigkeit des Vergleichs einen Steuereingang der Endstufe auflädt und den Zündstrom über den Leistungstransistor auf den Nominalwert regelt. Des Weiteren kann die Regelanordnung eine Stromsenke aufweisen. Die Auswerte- und Steuereinheit kann die Stromsenke aktivieren, welche die Ladung am Steuereingang der Endstufe abbaut und den Regelvorgang beschleunigt. Die Auswerteund Steuereinheit kann die Stromsenke beispielsweise aktivieren, wenn die Anzahl der Wechsel zwischen den Zündstromphasen den vorgegebenen zweiten Schwellwert erreicht oder überschreitet.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm einer Zündanordnung für ein Personenschutzmittel mit einem Ausführungsbeispiel einer erfindungsgemäßen Zündstromsteuerschaltung.
Fig. 2 zeigt ein detaillierteres Blockdiagramm der Zündanordnung für ein Personenschutzmittel aus Fig. 1.
Fig. 3 zeigt ein Kennliniendiagramm mit einem durch die erfindungsgemäße Zündstromansteuerung aus Fig. 1 und 2 erzeugten Zündstrom und einem durch eine herkömmliche Zündstromansteuerung erzeugten Zündstrom.
Fig. 4 zeigt ein schematisches Flussdiagramm eines Ausführungsbeispiels eines erfindungsgemäßen Verfahrens zur Ansteuerung von mindestens einem Auslöseelement für Personenschutzmittel.

### Ausführungsformen der Erfindung

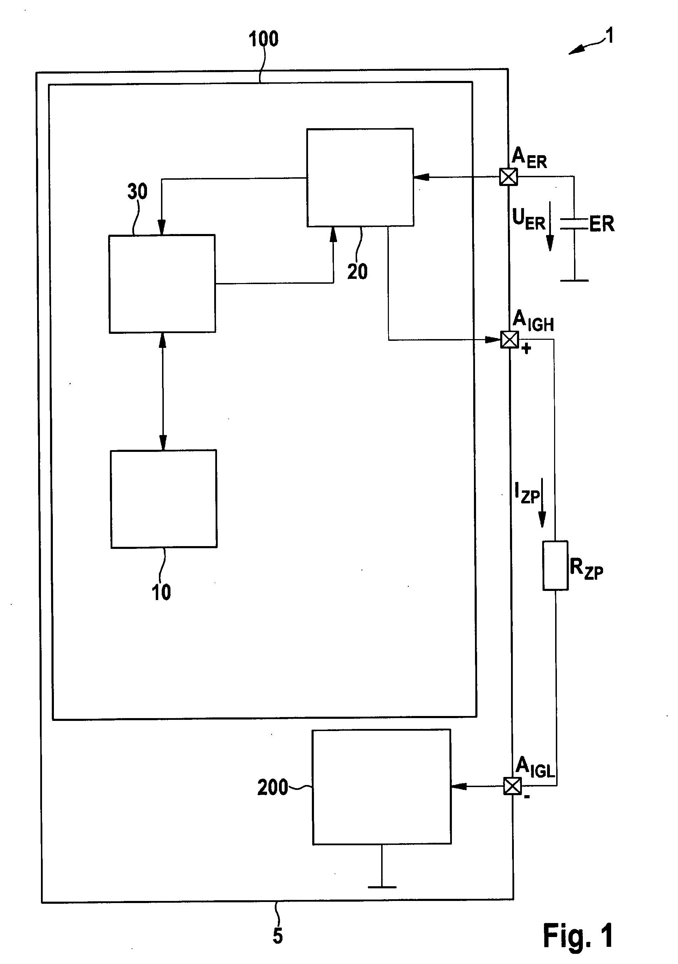

Wie aus Fig. 1 bis 3 ersichtlich ist, umfasst das dargestellte Ausführungsbeispiel einer Zündanordnung 1 eine erfindungsgemäßen Anordnung 5 zur Ansteuerung von mindestens einem Auslöseelement R_{ZP} für Personenschutzmittel. Im dargestellten Ausführungsbeispiel umfasst die Anordnung 5 zur Ansteuerung von mindestens einem Auslöseelement R_{ZP} für Personenschutzmittel eine High-Side-Steuerschaltung 100 mit einer High-Side-Endstufe 20, welche eine erste Verbindung von einer Energiequelle ER zu dem mindestens einen Auslöseelement R_{ZP} herstellt, eine Low-Side-Steuerschaltung 200, welche eine zweite Verbindung von dem mindestens einen Auslöseelement R_{ZP} zur Masse herstellt, und eine Regelanordnung 30, welche einen Zündstrom I_{ZP} für das mindestens eine Auslöseelement R_{ZP} nach Aktivierung eines Zündvorgangs auf einen vorgegebenen Nominalwert NOM regelt.

Erfindungsgemäß vergleicht eine Auswerte- und Steuereinheit 38 den fortlaufend detektierten Zündstrom I_{ZP} mit einem vorgegebenen ersten Schwellwert SW1 und bestimmt erste Phasen (RZP=∞), in welchen der Zündstrom I_{ZP} nach Erreichen des Nominalwerts NOM den ersten Schwellwert SW1 unterschreitet, und zweite Phasen (RZP=Ω), in welchen der Zündstrom I_{ZP} nach Unterschreiten des ersten Schwellwerts (SW1) den Nominalwert (NOM) wieder erreicht oder überschreitet. Die Auswerte- und Steuereinheit 38 zählt die Wechsel zwischen den Zündstromphasen und erhöht eine Regelgeschwindigkeit der Regelanordnung 30, wenn die Anzahl der Wechsel zwischen den Zündstromphasen einen vorgegebenen zweiten Schwellwert erreicht oder überschreitet. Der zweite Schwellwert wird in vorteilhafter Weise so vorgegeben, dass ein Auslöseelement R_{ZP} mit einem intermittierenden Widerstandsverhalten, wie beispielsweise eine Zündpille, sicher erkannt werden kann. Der zweite Schwellwert kann beispielsweise als.Anzahl der Wechsel im Bereich von 2 bis 4 vorgegeben werden. Im dargestellten Ausführungsbeispiel sind drei Zündstromphasenwechsel als zweiter Schwellwert vorgegeben. Die Anordnung 5 zur Ansteuerung von mindestens einem Auslöseelement R_{ZP} für Personenschutzmittel ist vorzugsweise als ASIC-Baustein ausgeführt, wobei ein Reserveenergiespeicher ER, welcher vorzugsweise als Speicherkondensator ausgeführt ist, eine Reservespannung U_{ER} an einem Anschlusspin A_{ER} zur Verfügung stellt. Das Auslöseelement R_{ZP} ist zwischen einem ersten Anschlusspin A_{IGH}, welcher mit der High-Side-Steuerschaltung 100 elektrisch verbunden ist, und einem zweiten Anschlusspin A_{IGL} eingeschleift, welcher mit der Low-Side-Steuerschaltung 200 elektrisch verbunden ist. Im dargestellten Ausführungsbeispiel ist das Auslöseelement R_{ZP} als Zündpille ausgeführt und kann verschiedene Widerstandswerte aufweisen. In einer Vorzündphase weist das als Zündpille ausgeführte Auslöseelement R_{ZP} beispielsweise einen Widerstandswert von ungefähr 20 (R_{ZP}=2Ω) auf. Während der Zündphase wechselt der Widerstand des als Zündpille ausgeführten Auslöseelements R_{ZP} zwischen einem Kurzschlusszustand (R_{ZP}=0Ω) mit einem Widerstandswert von ungefähr 0Ω und einem hochohmigen Zustand (R_{ZP}=∞) mit einem quasi unendlichen Widerstandswert. Des Weiteren kann das zwischen den Anschlusspins A_{IGH} und A_{IGL} eingeschleifte als Zündpille ausgeführte Auslöseelement R_{ZP} einen Kurzschluss gegen Masse, eine Unterbrechung und/oder einen Nebenschluss zu anderen Teilen im Fahrzeug als Extremzustände aufweisen.

Im dargestellten Ausführungsbeispiel ist die Regelanordnung als Teil der High-Side-Steuerschaltung 100 ausgeführt. Alternativ kann die Regelung des Zündstroms I_{ZP} auch in der Low-Side-Steuerschaltung 200 bzw. in der High-Side-Steuerschaltung 100 und in der Low-Side-Steuerschaltung 200 ausgeführt werden.

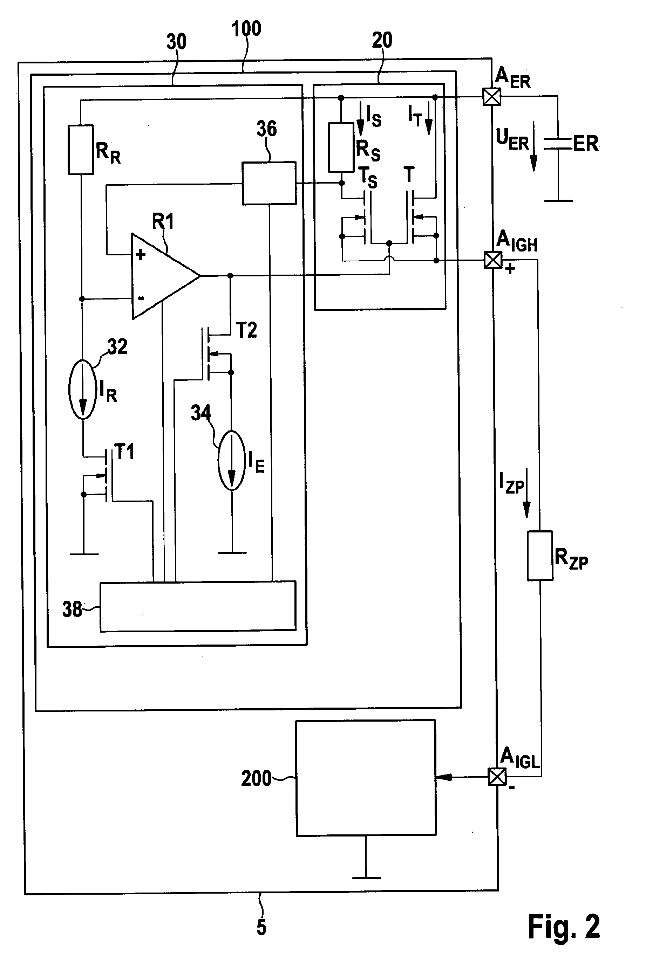

Wie aus Fig. 2 weiter ersichtlich ist, umfasst die High-Side-Endstufe 20 im dargestellten Ausführungsbeispiel zwei MOSFET-Leistungstransistoren T und T_{S} welche als Stromspiegelschaltung angeordnet sind. Zur Strommessung ist im Zweig eines Sense-Transistors T_{S} ein Sense-Widerstand R_{S} angeordnet, durch welchen ein Sense-Strom I_{S} als definierter Teil des Zündstrom I_{ZP} fließt, so dass über dem Sense-Widerstand R_{S} eine dem Zündstrom I_{ZP} entsprechende Spannung abfällt, welche beispielsweise über mindestens einen als Operationsverstärker ausgeführten Regler R1 ausgewertet werden kann. Am Ausgang der High-Side-Endstufe 20 addieren sich der durch den Sense-Transistor T_{S} fließende Sense-Strom I_{S} und ein durch den Transistor T fließender Strom I_{T} zum Zündstrom I_{ZP}, welcher durch das Auslöseelement R_{ZP} zur Low-Side-Steuerschaltung 200 geleitet wird. Ein in den Strompfad zum Regler R1 eingeschleifter Stromdetektor 36 wird verwendet, um den Sense-Strom I_{S}, welcher den Zündstrom I_{ZP} repräsentiert, zu detektieren und mit dem ersten Schwellwert SW1 zu vergleichen.

Im dargestellten Ausführungsbeispiel wird die über dem Sense-Widerstand R_{S} abfallende Spannung vom Regler R1 ausgewertet, welcher die den Zündstrom I_{ZP} repräsentierende Spannung mit einer über einem Regelwiderstand R_{R} abfallenden Spannung vergleicht, welche einen Regelreferenzstrom I_{R} repräsentiert. Der Regler R1 erzeugt ein entsprechendes Regelsignal für die MOSFET-Leistungstransistoren T und T_{S} zur Regelung des Zündstroms I_{ZP}, wobei der Regler R1 in Abhängigkeit des Vergleichs einen Steuereingang der Endstufe 20 bzw. Steuergates der MOSFET-Leistungstransistoren T und T_{S} auflädt und den Zündstrom I_{ZP} über den Leistungstransistor T auf den Nominalwert NOM regelt. In Abhängigkeit vom Regelsignal des Reglers R1 werden die Durchgangswiderstände der beiden MOSFET-Leistungstransistoren T und T_{S} eingestellt, um den gewünschten Zündstrom I_{ZP} zu erzeugen. Zudem weist die Regelanordnung 30 eine erste einstellbare Stromquelle 32 zur Vorgabe des Regelreferenzstroms I_{R} auf, welche von der Auswerte- und Steuereinheit 38 über einen ersten Schalttransistor T1 aktivierbar ist. Des Weiteren weist die Regelanordnung 30 eine Stromsenke 34 auf, welche von der Auswerte- und Steuereinheit 38 über einen zweiten Schalttransistor T2 aktivierbar ist. Die Stromsenke 34 bewirkt einen Entladestrom I_{E} und baut im aktivierten Zustand die Ladung am Steuereingang der Endstufe 20 bzw. an den Steuergates der MOSFET-Leistungstransistoren T und T_{S} ab, so dass der Regelvorgang beschleunigt werden kann. Die Auswerte- und Steuereinheit 38 aktiviert die Stromsenke 34, wenn die Anzahl der Wechsel zwischen den Zündstromphasen den vorgegebenen zweiten Schwellwert erreicht oder überschreitet.

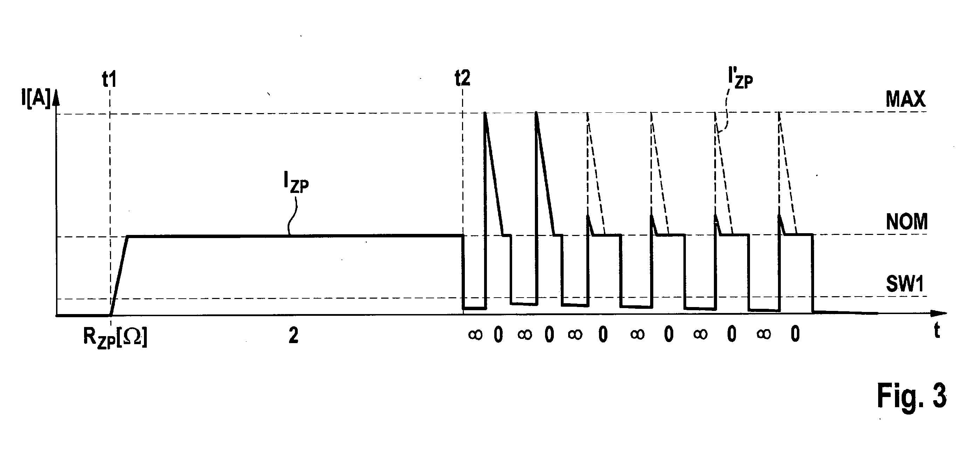

Wie aus Fig. 3 weiter ersichtlich ist, wird das als Zündpille ausgeführte Auslöseelement R_{ZP} ab Start der Zündung zum Zeitpunkt t1=0ms bestromt, so dass Energie am Steuereingang der Endstufe 20 bzw. an den Steuergates der MOSFET-Leistungstransistoren T und T_{S} aufgebaut und der Zündstrom I_{EP} auf den Nominalwert NOM geregelt wird. Bei ausreichendem Energieeintrag beginnt die Explosion, im dargestellten Ausführungsbeispiel zum Zeitpunkt t2=0,5ms, welcher ungefähr den Ablauf der halben Zündzeitdauer repräsentiert. Dabei bildet das als Zündpille ausgeführte Auslöseelement R_{ZP} während der Zündphase intermittierende Widerstandswerte aus (0 Ohm, ∞, Zwischenwerte). Der sich ergebende Zündstrom I'_{ZP} ist in Fig. 3 gestrichelt dargestellt. Wie aus Fig. 3 weiter ersichtlich ist, fließt in Phasen eines hochohmigen Zustands (R_{ZP}=∞) des als Zündpille ausgeführte Auslöseelement R_{ZP} gar kein Zündstrom I_{ZP} bzw. ein Zündstrom I_{ZP}, dessen Wert unter dem vorgegebenen ersten Schwellwert SW1 liegt. Bei einem nachfolgenden Wechsel zum Kurzschlusszustand (R_{ZP}=0Ω) des als Zündpille ausgeführte Auslöseelement R_{ZP} entsteht dagegen ein stark erhöhter Strompuls, da die Auswerte- und Steuereinheit 38 der Regelanordnung 30 erkennt, dass zuvor kein Zündstrom I_{ZP} geflossen ist.

Die Erfindung beruht darauf, dass diese "Aussetzer" des Zündstroms I_{ZP} erkannt und daraufhin die Regeleigenschaften der Regelanordnung 30 automatisch nur für den aktuellen Zündvorgang verändert werden. Dieses Verhalten ist in Fig. 3 durch den durchgezogenen Kurvenverlauf schematisch dargestellt. Nachdem der Zündstrom I_{ZP} dreimal den ersten Schwellwert SW1 unterschritten hat, erfolgt die dynamische Umschaltung des Regelverhaltens durch die Auswerte- und Steuereinheit 38. Das bedeutet, dass die Auswerte- und Steuereinheit 38, die Stromsenke 34 mit dem Entladestrom I_{E} über den zweiten Schaltransistor T2 aktiviert, wenn der Zündstrom I_{ZP} den ersten Schwellwert SW1 unterschreitet, um die Ladung am Steuereingang der Endstufe 20 bzw. an den Steuergates der MOSFET-Leistungstransistoren T und TS schneller abzubauen und dadurch den Regelvorgang zu beschleunigen. Durch den schnelleren Regelvorgang treten in vorteilhafter Weise deutlich verringerte Stromspitzen am Auslöseelement R_{ZP} auf.

Eine dauerhaft geänderte Auslegung der Regeleigenschaften könnte diesem Phänomen zwar entgegen wirken, ist jedoch aufgrund des großen Bereichs externer Beschaltung der Anordnung 5 zur Ansteuerung von mindestens einem Auslöseelement R_{ZP} für Personenschutzmittel nicht möglich. Die externe Beschaltung kann beispielsweise beliebige Kombinationen bzw. Anteile von ohmschen Widerständen (R), Induktivitäten (L) und/oder Kapazitäten (C) umfassen. Bei typischen Zündkreisen werden Auslöseelemente R_{ZP} mit einer Induktivität von bis zu 60µH verwendet. Für diese Hauptapplikation ist die Regelung des Zündstroms I_{ZP} ausgelegt. Für den Fall einer Anwendung von Zündkreisen mit einem Low-Energy-Actuator (LEA) als Auslöseelement R_{ZP} können jedoch Induktivitäten von bis zu 3mH auftreten. Durch die dauerhaft geänderten Regeleigenschaften kann es dann bei einer LEA-Beschaltung zu unerwünschten Oszillationen des Zündstroms I_{ZP} kommen. Treten jedoch intermittierende Widerstandswerte auf, dann kann die Auswerte- und Steuereinheit 38 darauf schließen, dass keine LEA-Induktivität im Zündkreis vorhanden ist, denn LEA-Kreise enthalten keine Zündmittel, und die Auswerte- und Steuereinheit 38 kann das Regelverhalten entsprechend umschalten.

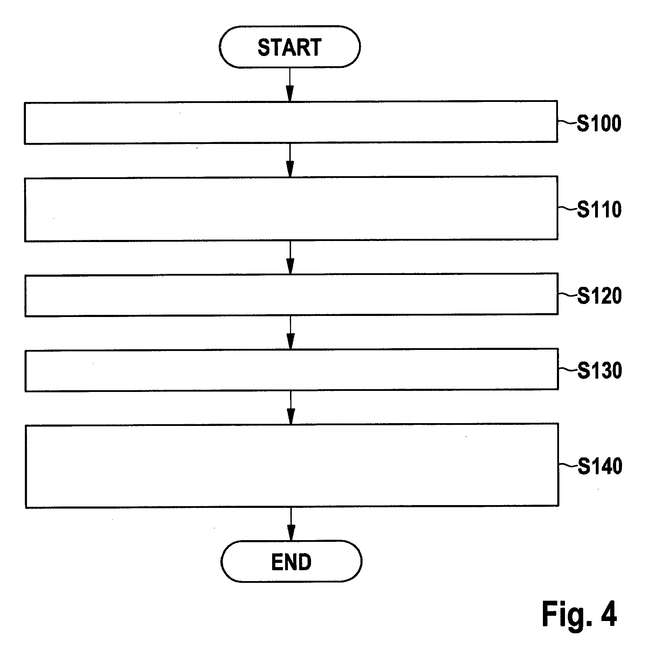

Nachfolgend wird unter Bezugnahme auf Fig. 4 ein Ausführungsbeispiel des erfindungsgemäßen Verfahrens zur Ansteuerung von mindestens einem Auslöseelement für ein Personenschutzmittel beschrieben.

Wie aus Fig. 4 ersichtlich ist, wird in einem Schritt S100 fortlaufend ein erzeugter Zündstrom I_{ZP} detektiert und im Schritt S110 mit einem vorgegebenen ersten Schwellwert SW1 verglichen. Im Schritt S120 werden erste Phasen (R_{ZP}=∞), in welchen der Zündstrom I_{ZP} nach Erreichen des Nominalwerts NOM den ersten Schwellwert SW1 unterschreitet, und zweite Phasen (R_{ZP}=0Ω) bestimmt, in welchen der Zündstrom I_{ZP} nach Unterschreiten des ersten Schwellwerts SW1 den Nominalwert NOM wieder erreicht oder überschreitet. Im Schritt S130 werden die Wechsel zwischen den Zündstromphasen gezählt. Im Schritt S130 wird die Regelgeschwindigkeit erhöht, wenn die Anzahl der Wechsel zwischen den Zündstromphasen einen vorgegebenen zweiten Schwellwert erreicht oder überschreitet. Der zweite Schwellwert kann beispielsweise als Anzahl der Wechsel im Bereich von 2 bis 4 vorgegeben werden.

Ausführungsformen der vorliegenden Erfindung stellen ein Verfahren und eine Anordnung zur Ansteuerung von mindestens einem Auslöseelement für Personenschutzmittel zur Verfügung, welche in vorteilhafter Weise Aussetzer im Zündstrom während eines Zündvorgangs erkennen und in Abhängigkeit von den erkannten Aussetzern automatisch die Eigenschaften des Zündstromregelvorgangs so verändern, dass nur noch geringfügige Zündstromüberhöhungen auftreten. Dies lässt eine Dimensionierung der Endstufenfläche auf die typischen Zündströme zu, so dass keine zusätzliche Fläche im ASIC-Baustein der Anordnung zur Ansteuerung von mindestens einem Auslöseelement für intermittierende Kurzschlüsse vorgehalten werden muss.

## Patentansprüche

1. Verfahren zur Ansteuerung von mindestens einem Auslöseelement für Personenschutzmittel, wobei über eine High-Side-Steuerschaltung (100) eine erste Verbindung von einer Energiequelle (ER) zu dem mindestens einen Auslöseelement (R_{ZP}) und über eine Low-Side-Steuerschaltung (200) eine zweite Verbindung von dem mindestens einen Auslöseelement (R_{ZP}) zur Masse herstellt werden, und wobei ein Zündstrom (I_{ZP}) für das mindestens eine Auslöseelement (R_{ZP}) nach Aktivierung eines Zündvorgangs auf einen vorgegebenen Nominalwert (NOM) geregelt wird, wobei der Zündstrom (I_{ZP}) fortlaufend detektiert und mit einem vorgegebenen ersten Schwellwert (SW1) verglichen wird, **dadurch gekennzeichnet, dass** erste Phasen (R_{ZP}=∞), in welchen der Zündstrom (I_{ZP}) nach Erreichen des Nominalwerts (NOM) den ersten Schwellwert (SW1) unterschreitet, und zweite Phasen (R_{ZP}=0Ω) bestimmt werden, in welchen der Zündstrom (I_{ZP}) nach Unterschreiten des ersten Schwellwerts (SW1) den Nominalwert (NOM) wieder erreicht oder überschreitet, und wobei die Wechsel zwischen den Zündstromphasen gezählt werden und eine Regelgeschwindigkeit erhöht wird, wenn die Anzahl der Wechsel zwischen den Zündstromphasen einen vorgegebenen zweiten Schwellwert erreicht oder überschreitet.

2. Verfahren nach Anspruch 1, **dadurch gekennzeichnet, dass** der zweite Schwellwert als Anzahl der Wechsel im Bereich von 2 bis 4 vorgegeben wird.

3. Verfahren nach Anspruch 1 oder 2, **dadurch gekennzeichnet, dass** durch Auswerten des Zündstromverlaufs ein angeschlossenes Auslöseelement (R_{ZP}) erkannt wird.

4. Verfahren nach Anspruch 3, **dadurch gekennzeichnet, dass** bei intermittierenden Stromwerten eine Zündpille mit intermittierenden Widerstandswerten erkannt wird.

5. Verfahren nach Anspruch 3, **dadurch gekennzeichnet, dass** bei im Wesentlichen gleichbleibenden Stromwerten ein LEA-Zündkreis erkannt wird.

6. Anordnung zur Ansteuerung von mindestens einem Auslöseelement für Personenschutzmittel mit einer High-Side-Steuerschaltung (100), welche eine erste Verbindung von einer Energiequelle (ER) zu dem mindestens einen Auslöseelement (R_{ZP}) herstellt, einer Low-Side-Steuerschaltung (200), welche eine zweite Verbindung von dem mindestens einen Auslöseelement (R_{ZP}) zur Masse herstellt, und einer Regelanordnung (30), welche einen Zündstrom (I_{ZP}) für das mindestens eine Auslöseelement (R_{ZP}) nach Aktivierung eines Zündvorgangs auf einen vorgegebenen Nominalwert (NOM) regelt, wobei eine Auswerte- und Steuereinheit (38) so ausgestaltet ist, dass sie den fortlaufend detektierten Zündstrom (I_{ZP}) mit einem vorgegebenen ersten Schwellwert (SW1) vergleicht **dadurch gekennzeichnet, dass** die Auswerte- und Steuereinheit (38) weiter so augestaltet ist, dass sie erste Phasen (R_{ZP}=∞), in welchen der Zündstrom (I_{ZP}) nach Erreichen des Nominalwerts (NOM) den ersten Schwellwert (SW1) unterschreitet, und zweite Phasen (R_{ZP}=0Ω) bestimmt, in welchen der Zündstrom (I_{ZP}) nach Unterschreiten des ersten Schwellwerts (SW1) den Nominalwert (NOM) wieder erreicht oder überschreitet, wobei die Auswerte- und Steuereinheit (38) so ausgestaltet ist, dass sie die Wechsel zwischen den Zündstromphasen zählt und eine Regelgeschwindigkeit der Regelanordnung (30) erhöht, wenn die Anzahl der Wechsel zwischen den Zündstromphasen einen vorgegebenen zweiten Schwellwert erreicht oder überschreitet.

7. Anordnung nach Anspruch 6, **dadurch gekennzeichnet, dass** die Auswerteund Steuereinheit (38) den Zündstrom (I_{ZP}) über die Regelanordnung (30) und mindestens eine Endstufe (20) einstellt, wobei die mindestens eine Endstufe (20) einen Leistungstransistor (T) zum Einstellen des Zündstroms (I_{ZP}) und einen Sense-Transistor (T_{S}) zum Einstellen eines Sense-Stroms (I_{S}) aufweist, welcher den Zündstrom (I_{ZP}) repräsentiert, wobei ein Stromdetektor (36) den Sense-Stroms (I_{S}) fortlaufend erfasst.

8. Anordnung nach Anspruch 7, **dadurch gekennzeichnet, dass** die Regelanordnung (30) eine Stromquelle (32), welche einen Referenzstrom (I_{R}) erzeugt, und einen Regler (R1) aufweist, wobei die Auswerte- und Steuereinheit (38) die Stromquelle (32) und den Regler (R1) aktiviert, wobei der Regler (R1) den Referenzstrom (I_{R}) mit dem Sense-Strom (I_{S}) vergleicht, welcher den erfassten Zündstrom (I_{ZP}) repräsentiert, wobei der Regler in Abhängigkeit des Vergleichs einen Steuereingang der Endstufe (20) auflädt und den Zündstrom (I_{ZP}) über den Leistungstransistor (T) auf den Nominalwert (NOM) regelt.

9. Anordnung nach Anspruch 7 oder 8, **dadurch gekennzeichnet, dass** die Regelanordnung (30) eine Stromsenke (34) aufweist, wobei die Auswerte- und Steuereinheit (38) die Stromsenke (34) aktiviert, welche die Ladung am Steuereingang der Endstufe (20) abbaut und den Regelvorgang beschleunigt.

10. Anordnung nach Anspruch 9, **dadurch gekennzeichnet, dass** die Auswerteund Steuereinheit (38) die Stromsenke (34) aktiviert, wenn die Anzahl der Wechsel zwischen den Zündstromphasen den vorgegebenen zweiten Schwellwert erreicht oder überschreitet.

## Claims

1. Method for activating at least one tripping element for personal protection means, a first connection being made via a high-side control circuit (100) from a power source (ER) to the at least one tripping element (R_{ZP}), and a second connection being made via a low-side control circuit (200) from the at least one tripping element (R_{ZP}) to earth, and an igniting current (I_{ZP}) for the at least one tripping element (R_{ZP}) being controlled after activation of an ignition operation to a prescribed nominal value (NOM), the igniting current (I_{ZP}) being continuously detected and compared with a prescribed first threshold value (SW1), **characterized in that** first phases (R_{ZP} = ∞) are determined in which the igniting current (I_{ZP}) undershoots the first threshold value (SW1) after reaching the nominal value (NOM), and second phases (R_{ZP} = 0Ω) are determined in which, after undershooting the first threshold value (SW1), the igniting current (I_{ZP}) again reaches or overshoots the nominal value (NOM), and the changes between the igniting current phases are counted and a control rate is increased when the number of the changes between the igniting current phases reaches or overshoots a prescribed second threshold value.

2. Method according to Claim 1, **characterized in that** the second threshold value is prescribed as the number of the changes in the range from 2 to 4.

3. Method according to Claim 1 or 2, **characterized in that** a connected tripping element (R_{ZP}) is detected by evaluating the igniting current profile.

4. Method according to Claim 3, **characterized in that** an ignitor with intermittent resistance values is detected in the event of intermittent current values.

5. Method according to Claim 3, **characterized in that** an LEA ignition circuit is detected in the event of substantially constant current values.

6. Arrangement for activating at least one tripping element for personal protection means, having a high-side control circuit (100) which makes a first connection from a power source (ER) to the at least one tripping element (R_{ZP}), a low-side control circuit (200) which makes a second connection from the at least one tripping element (R_{ZP}) to earth, and a control arrangement (30) which controls an igniting current (I_{ZP}) for the at least one tripping element (R_{ZP}) after activation of an ignition operation to a prescribed nominal value (NOM), an evaluation and control unit (38) being designed such that it compares the continuously detected igniting current (I_{ZP}) with a prescribed first threshold value (SW1), **characterized in that** the evaluation and control unit (38) is further designed so that it determines first phases (R_{ZP} = ∞) in which the igniting current (I_{ZP}) undershoots the first threshold value (SW1) after reaching the nominal value (NOM), and second phases (R_{ZP} = 0Ω) in which the igniting current (I_{ZP}) again reaches or overshoots the nominal value (NOM) after undershooting the first threshold value (SW1), the evaluation and control unit (38) being designed such that it counts the changes between the igniting current phases and increases a control rate of the control arrangement (30) when the number of the changes between the igniting current phases reaches or overshoots a prescribed second threshold value.

7. Arrangement according to Claim 6, **characterized in that** the evaluation and control unit (38) sets the igniting current (I_{ZP}) via the control arrangement (30) and at least one output stage (20), the at least one output stage (20) having a power transistor (T) for setting the igniting current (I_{ZP}) and a sensing transistor (Ts) for setting a sensing current (Is) which represents the igniting current (I_{ZP}), a current detector (36) continuously detecting the sensing current (I_{S}).

8. Arrangement according to Claim 7, **characterized in that** the control arrangement (30) has a power source (32) which produces a reference current (I_{R}), and a controller (R1), the evaluation and control unit (38) activating the power source (32) and the controller (R1), the controller (R1) comparing the reference current (I_{R}) with the sensing current (Is) which represents the detected igniting current (I_{ZP}), the controller loading a control input of the output stage (20) as a function of the comparison and controls the igniting current (I_{ZP}) via the power transistor (T) to the nominal value (NOM).

9. Arrangement according to Claim 7 or 8, **characterized in that** the control arrangement (30) has a current sink (34), the evaluation and control unit (38) activating the current sink (34) which reduces the charge at the control input of the output stage (20) and accelerates the control operation.

10. Arrangement according to Claim 9, **characterized in that** the evaluation and control unit (38) activates the current sink (34) when the number of the changes between the igniting current phases reaches or overshoots the prescribed second threshold value.

## Revendications

1. Procédé de commande d'au moins un élément de déclenchement pour moyen de protection des personnes, sachant qu'une première liaison est établie d'une source d'énergie (ER) à l'au moins un élément de déclenchement (R_{ZP}) via un circuit de commande de côté haut (100) et qu'une deuxième liaison est établie de l'au moins un élément de déclenchement (R_{ZP}) à la masse via un circuit de commande de côté bas (200) et qu'un courant d'allumage (I_{ZP}) pour l'au moins un élément de déclenchement (R_{ZP}) est réglé, après activation d'un processus d'allumage, à une valeur nominale (NOM) prédéfinie, le courant d'allumage (I_{ZP}) étant détecté en continu et comparé à une première valeur seuil (SW1) prédéfinie, **caractérisé en ce que** l'on détermine des premières phases (R_{ZP}=∞) pendant lesquelles le courant d'allumage (I_{ZP}) passe en dessous de la première valeur seuil (SW1) après avoir atteint la valeur nominale (NOM) et des deuxièmes phases (R_{ZP}=0Ω) pendant lesquelles le courant d'allumage (I_{ZP}), après être passé en dessous de la première valeur seuil (SW1), atteint de nouveau la valeur nominale (NOM) ou la dépasse et que l'alternance entre les phases de courant d'allumage sont comptées et qu'une vitesse de réglage est accrue lorsque le nombre d'alternances entre les phases de courant d'allumage atteint ou dépasse une deuxième valeur seuil prédéfinie.

2. Procédé selon la revendication 1, **caractérisé en ce que** la deuxième valeur seuil est prédéfinie comme un nombre d'alternances dans la plage de 2 à 4.

3. Procédé selon la revendication 1 ou 2, **caractérisé en ce que** l'analyse de la courbe de courant d'allumage permet de reconnaître un élément de déclenchement (R_{ZP}) raccordé.

4. Procédé selon la revendication 3, **caractérisé en ce qu'**en cas de valeurs de courant intermittentes, une pile d'allumage avec des valeurs de résistance intermittentes est détectée.

5. Procédé selon la revendication 3, **caractérisé en ce qu'**en cas de valeurs de courant pour l'essentiel constantes, un circuit d'allumage LEA est reconnu.

6. Agencement de commande d'au moins un élément de déclenchement pour moyen de protection des personnes avec un circuit de commande de côté haut (100) établissant une première liaison allant d'une source d'énergie (ER) à l'au moins un élément de déclenchement (R_{ZP}), avec un circuit de commande de côté bas (200) établissant une deuxième liaison allant de l'au moins un élément de déclenchement (R_{ZP}) à la masse et avec un agencement de réglage (30) réglant un courant d'allumage (I_{ZP}) à une valeur nominale (NOM) prédéfinie pour l'au moins un élément de déclenchement (R_{ZP}) après activation d'un processus d'allumage, une unité d'analyse et de commande (38) étant réalisée de telle sorte qu'elle compare le courant d'allumage (I_{ZP}) détecté en continu à une première valeur seuil (SW1) prédéfinie, **caractérisé en ce que** l'unité d'analyse et de commande (38) est en outre réalisée façon à définir les premières phases (R_{ZP}=∞) pendant lesquelles le courant d'allumage (I_{ZP}) passe en dessous de la première valeur seuil (SW1) après avoir atteint la valeur nominale (NOM) et les deuxièmes phases (R_{ZP}=0Ω) pendant lesquelles le courant d'allumage (I_{ZP}) atteint de nouveau la valeur nominale (NOM) ou la dépasse, après le passage en dessous de la première valeur seuil (SW1), l'unité d'analyse et de commande (38) étant réalisée de façon à compter l'alternance entre les phases de courant d'allumage et à accroître une vitesse de réglage de l'agencement de réglage (30) lorsque le nombre d'alternances entre les phases de courant d'allumage atteint une deuxième valeur seuil prédéfinie ou la dépasse.

7. Agencement selon la revendication 6, **caractérisé en ce que** l'unité d'analyse et de commande (38) règle le courant d'allumage (I_{ZP}) via l'agencement de réglage (30) et au moins un dernier étage (20), l'au moins un dernier étage (20) comportant un transistor de puissance (T) pour régler le courant d'allumage (I_{ZP}) et un transistor de détection (TS) pour le réglage d'un courant de détection (Is) représentant le courant d'allumage (I_{ZP}), un détecteur de courant (36) détectant en continu le courant de détection (I_{S}).

8. Agencement selon la revendication 7, **caractérisé en ce que** l'agencement de réglage (30) comporte une source de courant (32) produisant un courant de référence (I_{R}) et un régulateur (R1), l'unité d'analyse et de commande (38) activant la source de courant (32) et le régulateur (R1), le régulateur (R1) comparant le courant de référence (I_{R}) au courant de détection (I_{S}) représentant le courant d'allumage (I_{ZP}) détecté, le régulateur chargeant en fonction de la comparaison une entrée de commande du dernier étage (20) et réglant le courant d'allumage (I_{ZP}) à la valeur nominale (NOM) via le transistor de puissance (T).

9. Agencement selon la revendication 7 ou 8, **caractérisé en ce que** l'agencement de réglage (30) comporte une baisse de courant (34), l'unité d'analyse et de commande (38) activant la baisse de courant (34) réduisant la charge au niveau de l'entrée de commande du dernier étage (20) et accélérant le processus de réglage.

10. Agencement selon la revendication 9, **caractérisé en ce que** l'unité d'analyse et de commande (38) active la baisse de courant (34) lorsque le nombre d'alternances entre les phases de courant d'allumage atteint la deuxième valeur seuil prédéfinie ou la dépasse.
